# EUROPEAN PATENT APPLICATION

(11) **EP 4 299 912 A1**
(43) Date of publication of application: **03.01.2024**
(21) Application number: 22182512.8
(22) Date of filing: 01.07.2022
(51) Int. Cl.: F04D 15/00, F04D 15/02

(54) **A METHOD AND AN ARRANGEMENT FOR STARTING PUMPING WITH A SUBMERSIBLE CENTRIFUGAL PUMP FOR PUMPING FLUID**

(71) Applicant: ABB SCHWEIZ AG, 5400 Baden (CH)
(72) Inventor: Niskanen, Simo, 00380 Helsinki (FI); Laatikainen, Maria, 00380 Helsinki (FI); Rodas, Michael, 00380 Helsinki (FI)
(74) Representative: Kolster Oy Ab

(57) **Abstract**

The present invention relates to the field of controlling pumps and pumping plants and installations, such as electrical devices and installations used for controlling pumps and pumping plants and installations, and more particularly to a method and an arrangement for starting pumping with a submersible centrifugal pump for pumping fluid. In the arrangement for starting pumping with a submersible centrifugal pump (2) for pumping fluid, said arrangement comprising a submersible centrifugal pump (2) and an electric drive apparatus (10) arranged for controlling the motor (22) of said submersible centrifugal pump (2), said electric drive apparatus (10) is arranged: for starting (31) an accelerating ramp (42) for ramping up the speed of the motor (22) of said submersible centrifugal pump (2); for monitoring the torque of the motor (22) of said submersible centrifugal pump (2) versus pump motor speed; and upon detecting (33) a significant increase in the derivate of monitored torque versus pump motor speed, for starting an operational pumping ramp (43) for the motor (22) of said submersible centrifugal pump (2).

## Description

### FIELD OF THE INVENTION

The present invention relates to the field of controlling pumps and pumping plants and installations, such as electrical devices and installations used for controlling pumps and pumping plants and installations, and more particularly to a method and an arrangement for starting pumping with a submersible centrifugal pump for pumping fluid.

### BACKGROUND OF THE INVENTION

Submersible centrifugal pumps are widely used in pumping plants and installations for pumping fluid from large depths. Some of the submersible centrifugal pumps may be designed to fit in narrow holes called boreholes which are drilled to extract fluid from deep depths below ground. Submersible centrifugal pumps may be used for pumping drinking water or water for irrigation from water tables or aquifers in depths of several hundreds of meters below ground.

In the following, prior art will be described with reference to the accompanying figures, of which:
Figure 1 illustrates one example of a submersible centrifugal pump according to prior art.
Figure 2 illustrates exemplary uses of submersible centrifugal pumps according to prior art.

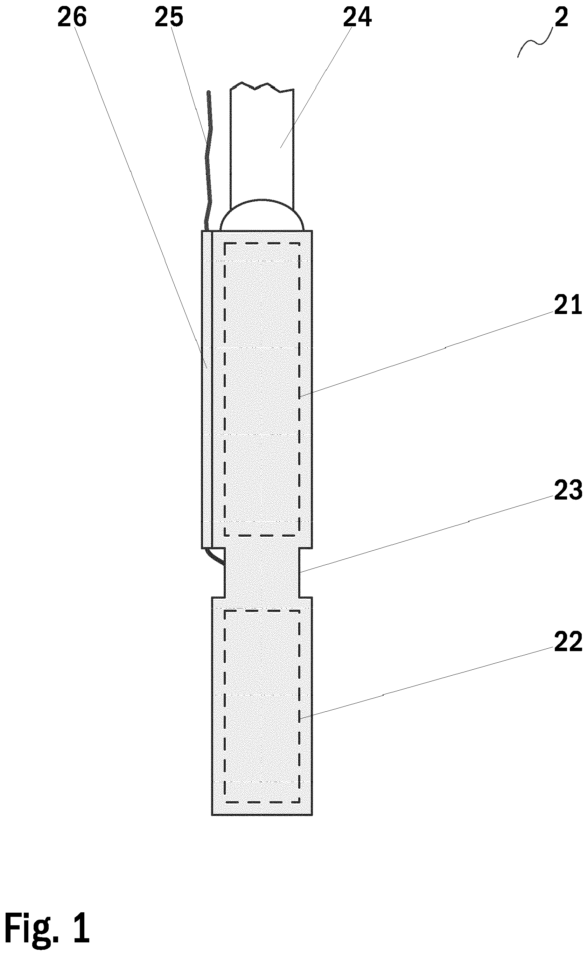

Figure 1 illustrates one example of a submersible centrifugal pump according to prior art. The presented example of a submersible centrifugal pump 2 according to prior art is a submersible centrifugal pump 2 designed to fit into a narrow borehole. The presented submersible centrifugal pump 2 according to prior art comprises a motor 22 and a pump unit 21 driven by said motor 22. The motor 22 of submersible pump 2 may be hermetically sealed. In the presented submersible centrifugal pump 2 according to prior art the motor 22 is located below the pump unit 21 at the bottom of the submersible centrifugal pump 2, with the pump unit 21 located above the motor 22. The pump intake 23 is in the middle of the presented submersible centrifugal pump 2. The pump unit 21 of the presented submersible centrifugal pump 2 may be fluid lubricated i.e., the bearings of the pump unit 21 are lubricated by the pumped fluid. The pumped fluid may be water.

The presented submersible centrifugal pump 2 according to prior art also comprises a pump discharge hose 24 or a pump discharge pipe 24 at the top part of the submersible centrifugal pump 2. The power is provided to the motor 22 of submersible centrifugal pump 2 via a power cable 25. The submersible centrifugal pump 2 may also comprise a cable gland 26 for protection of the power cable 25. In the presented example of Figure 1 the motor 22 is integrated as a part of the submersible centrifugal pump 2. In another exemplary solution the motor providing power to the submersible centrifugal pump may be arranged as a separate unit from the submersible centrifugal pump. In yet another exemplary solution the motor providing power to the submersible centrifugal pump may be arranged to be above the ground.

In Figure 1 only one submersible centrifugal pump according to prior art is illustrated as an example. There are several other types of submersible centrifugal pumps according to prior art available. In another exemplary solution the motor providing power to the submersible centrifugal pump may be arranged to be above the ground.

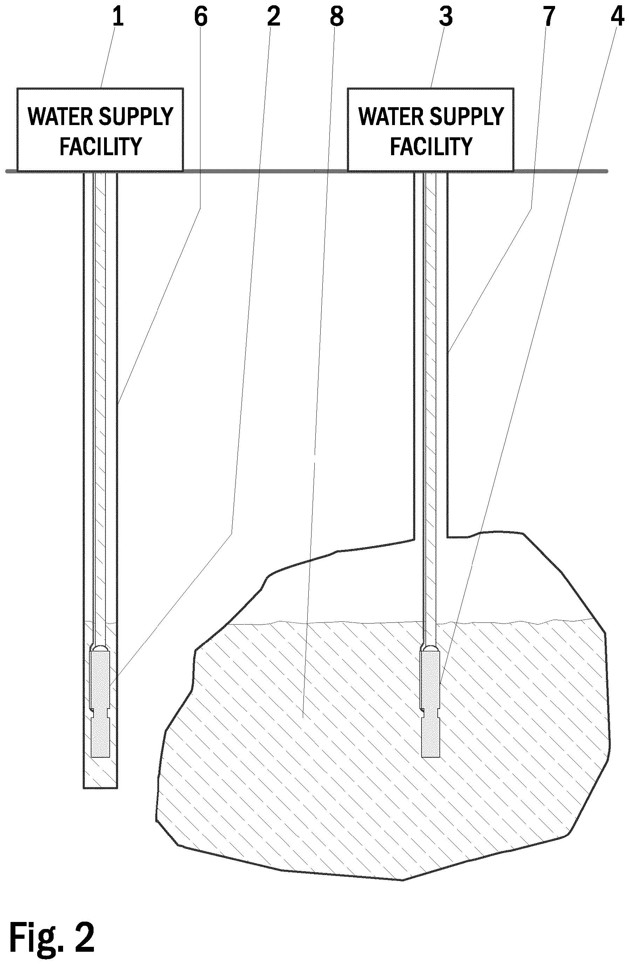

Figure 2 illustrates exemplary uses of submersible centrifugal pumps according to prior art. In the exemplary uses illustrated in Figure 2 the pumped fluid is water. In other possible uses of submersible centrifugal pumps in the prior art the pumped fluid may be water or another type of fluid. In the left side of Figure 2 a submersible centrifugal pump 2 according to prior art is fitted into a borehole 6. As illustrated, said submersible centrifugal pump 2 according to prior art is used to pump water from said borehole 6 to a water supply facility 1. In the right side of Figure 2 another submersible centrifugal pump 4 according to prior art is fitted into another borehole 7. Said another borehole extends via said another borehole 7 to an aquifer 8 deep below ground. As illustrated, said another submersible centrifugal pump 4 according to prior art is used to pump water from said aquifer 8 to a water supply facility 3.

In prior art submersible centrifugal pump solutions, when starting the submersible centrifugal pump in a borehole, the fluid in the bore hole easily gets stirred, which adds turbidity and cloudiness in the borehole fluid. This can be avoided by a slow start of the operation of the submersible centrifugal pump.

There is a significant drawback with prior art solutions for starting pumping with a submersible centrifugal pump for pumping fluid is that a slow start of the submersible centrifugal pump takes too much time and therefore is no efficient enough. On the other hand, starting the submersible centrifugal pump in a borehole faster, the fluid in the bore hole easily gets stirred, which results to turbidity and cloudiness in the pumped borehole fluid. Both solutions lead to inadequate solutions for starting pumping with a submersible centrifugal pump for pumping fluid.

There is a demand in the market for a method and an arrangement for starting pumping with a submersible centrifugal pump for pumping fluid that would provide a reduced turbidity and reduced cloudiness in the pumped fluid, and which would provide a fast and secure starting towards operational pumping.

### BRIEF DESCRIPTION OF THE INVENTION

The object of the invention is to introduce a method and an arrangement for starting pumping with a submersible centrifugal pump for pumping fluid, which would provide a reduced turbidity and reduced cloudiness in the pumped fluid, and which would provide a fast and secure starting towards operational pumping. Advantageous embodiments are furthermore presented.

It is brought forward a new method for starting pumping with a submersible centrifugal pump for pumping fluid, in which method: an accelerating ramp for ramping up the speed of the motor of said submersible centrifugal pump is started by an electric drive apparatus controlling said motor, the torque of the motor of said submersible centrifugal pump versus pump motor speed is monitored in said electric drive apparatus, and upon detecting a significant increase in the derivate of monitored torque versus pump motor speed, an operational pumping ramp for the motor of said submersible centrifugal pump is started by said electric drive apparatus.

In a preferred embodiment of said method, when detecting said significant increase in the derivate of monitored torque versus pump motor speed, said significant increase is determined to indicate an operational pumping condition.

In a preferred embodiment of said method, before said accelerating ramp, a starting ramp for starting the motor of said submersible centrifugal pump is carried out.

In a preferred embodiment of said method, said pumped fluid is water.

Furthermore, it is brought forward a new arrangement for starting pumping with a submersible centrifugal pump for pumping fluid, said arrangement comprising a submersible centrifugal pump and an electric drive apparatus arranged for controlling the motor of said submersible centrifugal pump, in which arrangement said electric drive apparatus is arranged: for starting an accelerating ramp for ramping up the speed of the motor of said submersible centrifugal pump, for monitoring the torque of the motor of said submersible centrifugal pump versus pump motor speed; and upon detecting a significant increase in the derivate of monitored torque versus pump motor speed, for starting an operational pumping ramp for the motor of said submersible centrifugal pump.

In a preferred embodiment of said arrangement, said electric drive apparatus is arranged to determine when said detected significant increase in the derivate of monitored torque versus pump motor speed indicates the flow of fluid through said submersible centrifugal pump.

In a preferred embodiment of said arrangement, said electric drive apparatus is arranged to carry out before said accelerating ramp a starting ramp for starting the motor of said submersible centrifugal pump.

In a preferred embodiment of said arrangement, said motor providing power to said submersible centrifugal pump is arranged as a separate unit from said submersible centrifugal pump.

In a preferred embodiment of said arrangement, said motor providing power to the submersible centrifugal pump is arranged above the ground.

In a preferred embodiment of said arrangement, said pumped fluid is water.

In a preferred embodiment of said arrangement, said electric drive apparatus is a frequency converter.

### BRIEF DESCRIPTION OF THE DRAWINGS

In the following, the present invention will be described in more detail by way of example and with reference to the attached drawings, in which:
Figure 1 illustrates one example of a submersible centrifugal pump according to prior art.
Figure 2 illustrates exemplary uses of submersible centrifugal pumps according to prior art.

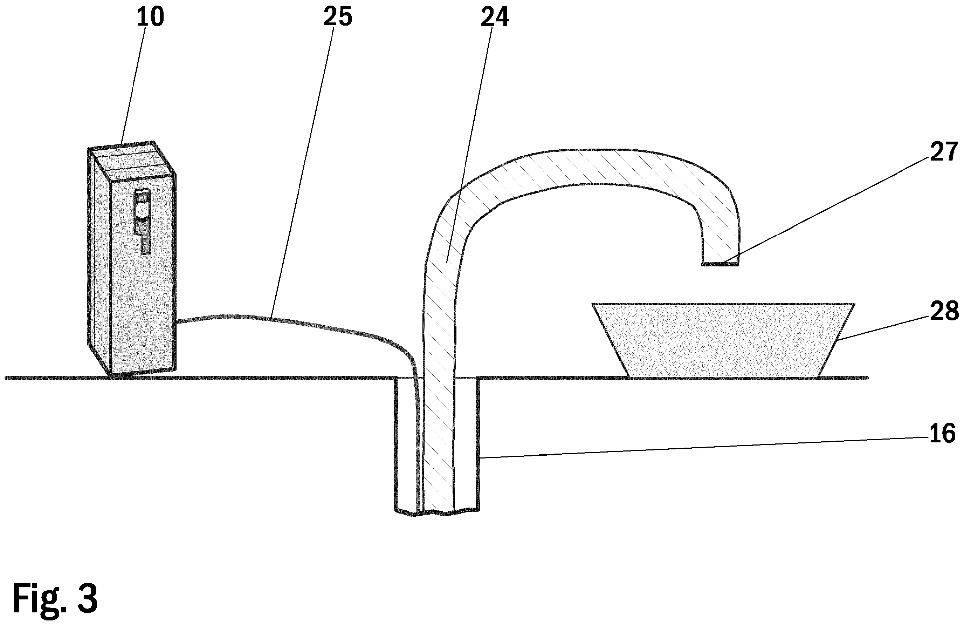

Figure 3 illustrates a part of one embodiment of an arrangement according to the present invention for starting pumping with a submersible centrifugal pump for pumping fluid.

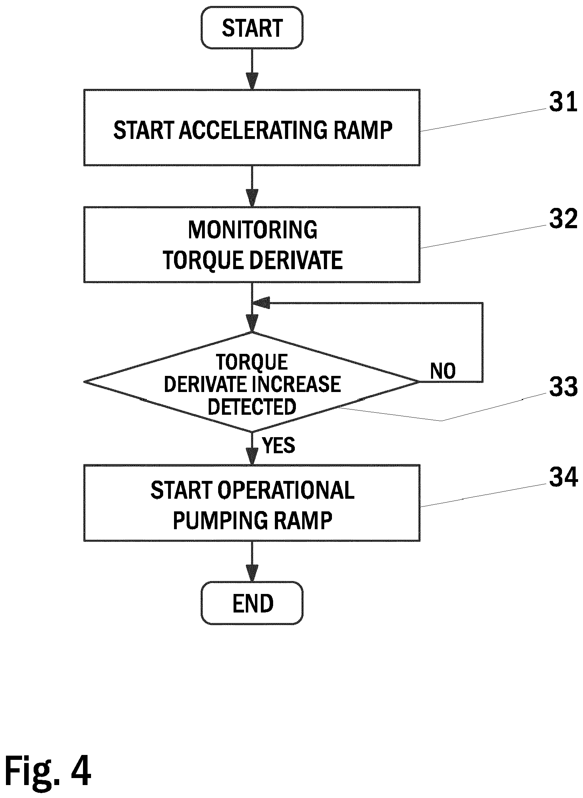

Figure 4 illustrates a flow diagram of one embodiment of a method according to the present invention for starting pumping with a submersible centrifugal pump for pumping fluid.

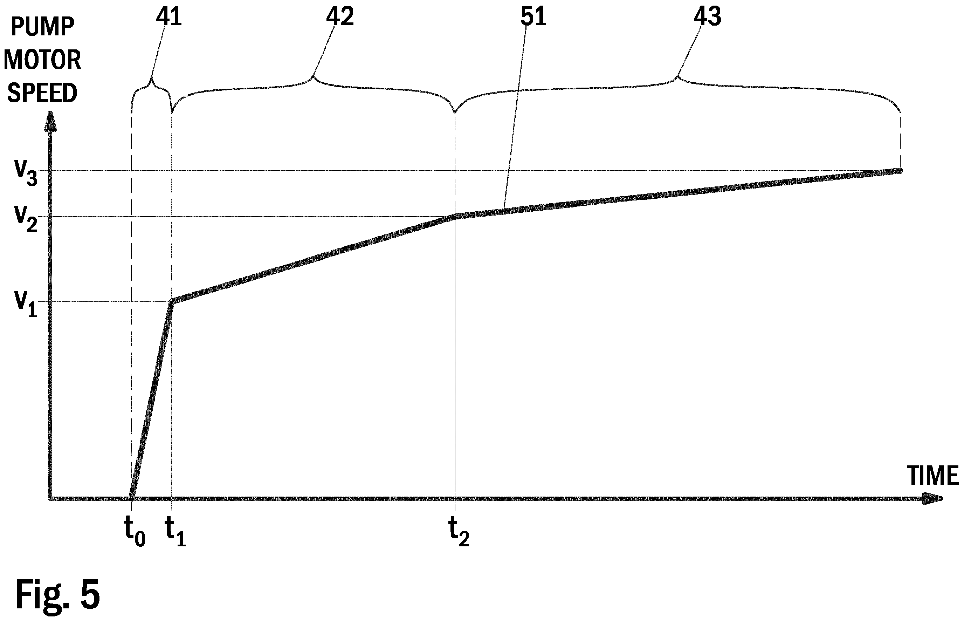

Figure 5 illustrates the development of pump motor speed versus time of embodiment of a solution according to the present invention for starting pumping with a submersible centrifugal pump for pumping fluid.

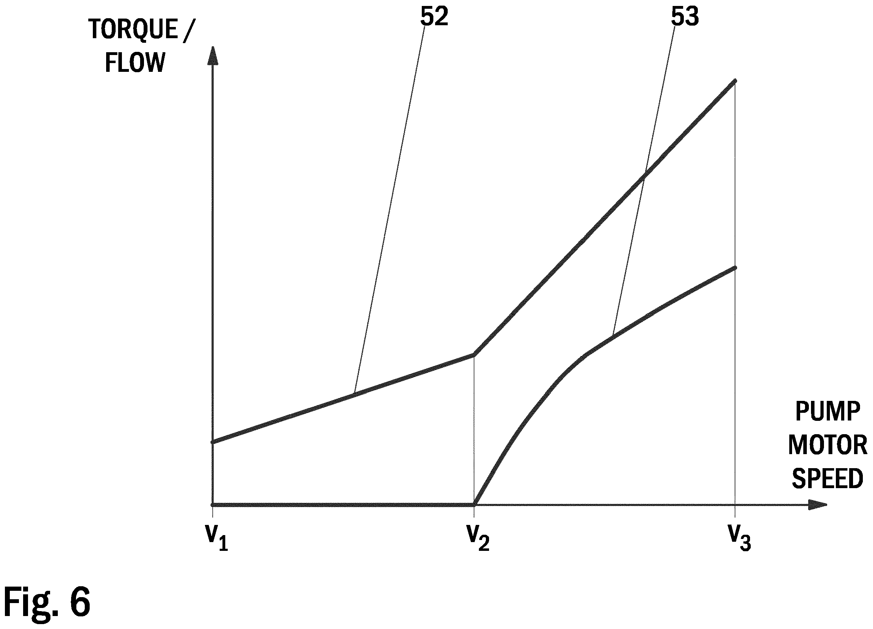

Figure 6 illustrates the development of torque and fluid quantity per time versus pump motor speed of embodiment of a solution according to the present invention for starting pumping with a submersible centrifugal pump for pumping fluid.

The foregoing aspects, features and advantages of the invention will be apparent from the drawings and the detailed description related thereto.

Prior art drawings of Figures 1 to 2 have been presented earlier. In the following, the invention will be described in greater detail by means of preferred embodiments with reference to the accompanying drawings of Figures 3 to 6.

### DETAILED DESCRIPTION

The arrangement for starting pumping with a submersible centrifugal pump for pumping fluid according to one embodiment of the present invention comprises a submersible centrifugal pump and an electric drive apparatus arranged for controlling the motor of said submersible centrifugal pump, wherein said electric drive apparatus is arranged: for starting an accelerating ramp for ramping up the speed of the motor of said submersible centrifugal pump; for monitoring the torque of the motor of said submersible centrifugal pump versus pump motor speed; and upon detecting a significant increase in the derivate of monitored torque versus pump motor speed, for starting an operational pumping speed ramp for the motor of said submersible centrifugal pump.

Figure 3 illustrates a part of one embodiment of an arrangement according to the present invention for starting pumping with a submersible centrifugal pump for pumping fluid. Said submersible centrifugal pump 2 may be any type of prior art submersible centrifugal pump 2 comprising a motor 22 and a pump unit 21 driven by said motor 22. The submersible centrifugal pump 2 is lowered down into a borehole 16 for pumping. Said submersible centrifugal pump 2, said motor 22 and said pump unit 21 are not shown in Figure 3. The presented embodiment of an arrangement comprises a submersible centrifugal pump 2 and an electric drive apparatus 10 arranged for controlling the motor 22 of said submersible centrifugal pump 2. In the presented embodiment, said motor 22 of said submersible centrifugal pump 2 is controlled via a power cable 25 extending from said motor 22 of said submersible centrifugal pump 2 to said electric drive apparatus 10. In the presented embodiment, fluid is pumped by said submersible centrifugal pump 2 to a fluid storage 28 through a pump discharge hose 24 or a pump discharge pipe 24 of said submersible centrifugal pump 2 extending from said submersible centrifugal pump 2 to a fluid outlet 27 providing fluid to said fluid storage 28.

In the presented embodiment, said fluid outlet 27 of the arrangement according to the present invention is arranged to provide fluid to a fluid storage 28. The pumped fluid may be water i.e., said fluid outlet 27 may be a water outlet 27 arranged to provide water to a fluid storage 28, said fluid storage 28 being a water storage 28. In other possible embodiments of the arrangement according to the present invention said fluid outlet 27 may be arranged to provide the water or another type of fluid directly into a specific use, such as into irrigation, into a specific process use or into other use.

In the presented embodiment, said electric drive apparatus 10 is arranged for starting an accelerating ramp for ramping up the speed of the motor 22 of said submersible centrifugal pump 2. Furthermore, said electric drive apparatus 10 is arranged for monitoring the torque of the motor 22 of said submersible centrifugal pump 2 versus pump motor speed, and upon detecting a significant increase in the derivate of monitored torque versus pump motor speed, said electric drive apparatus 10 is arranged for starting an operational pumping ramp for the motor 22 of said submersible centrifugal pump 2. When detecting said significant increase in the derivate of monitored torque versus pump motor speed, said significant increase is determined to indicate an operational pumping condition in which the fluid has been pumped above the ground level and there is an increased flow of fluid through said submersible centrifugal pump 2.

When referring to the term an "operational pumping condition", in this application it is meant to refer to a condition in which the fluid has been pumped to the final level above the ground level and as there no further increase due to the lifting there now starts an increased proper flow of fluid through said submersible centrifugal pump to said fluid outlet.

In another embodiment of an arrangement according to the present invention for starting pumping with a submersible centrifugal pump for pumping fluid the motor providing power to the submersible centrifugal pump may be arranged as a separate unit from the submersible centrifugal pump. In yet another further embodiment of an arrangement according to the present invention for starting pumping with a submersible centrifugal pump for pumping fluid the motor providing power to the submersible centrifugal pump may be arranged to be above the ground.

Figure 4 illustrates a flow diagram of one embodiment of a method according to the present invention for starting pumping with a submersible centrifugal pump for pumping fluid. In the method according to the present one embodiment an accelerating ramp for ramping up the speed of the motor 22 of said submersible centrifugal pump 2 is first started 31 by an electric drive apparatus 10 controlling said motor 22. Thereafter, in the method according to the present one embodiment, the torque of the motor 22 of said submersible centrifugal pump 2 versus pump motor speed is monitored 32 in said electric drive apparatus 10.

In the method according to the present one embodiment, upon detecting 33 a significant increase in the derivate of monitored torque versus pump motor speed, an operational pumping ramp for the motor 22 of said submersible centrifugal pump 2 is started 34 by said electric drive apparatus 10. When detecting 33 said significant increase in the derivate of monitored torque versus pump motor speed, said significant increase is determined to indicate an operational pumping condition in which the fluid has been pumped above the ground level and there is an increased flow of fluid through said submersible centrifugal pump 2. In the method for starting pumping said operational pumping ramp is the last step in which the operational pumping condition has been reached and the pumping is proceeded with as in regular pumping.

When referring to the term a "significant increase" in the derivate of monitored torque versus pump motor speed indicating the flow of fluid through said submersible centrifugal pump, in this application it is meant to refer to a substantial and permanent increase in the derivate of monitored torque versus pump motor speed.

When referring to the term an "operational pumping condition", in this application it is meant to refer to a condition in which the fluid has been pumped to the final level above the ground level and as there no further increase due to the lifting there now starts an increased proper flow of fluid through said submersible centrifugal pump to said fluid outlet.

Figure 5 illustrates the development of pump motor speed versus time of another embodiment of a solution according to the present invention for starting pumping with a submersible centrifugal pump for pumping fluid. In Figure 5, the development of pump motor speed versus time i.e., the speed of the motor 22 of said submersible centrifugal pump 2 versus time is indicated by a graph 51. As illustrated in Figure 5, at time to a starting ramp 41 for starting the motor 22 of said submersible centrifugal pump 2 is started. During said starting ramp 41 between the time to and the time t₁ the pump motor speed i.e., the speed of the motor 22 of said submersible centrifugal pump 2 rises to speed V1.

After said starting ramp 41 has been carried out an accelerating ramp 42 for ramping up the speed of the motor 22 of said submersible pump 2 is started 31. Thereafter, in the solution according to the present embodiment, the torque of the motor 22 of said submersible centrifugal pump 2 versus pump motor speed is monitored 32 in said electric drive apparatus 10. During said accelerating ramp 42 between the time t₁ and the time t₂ the speed of the motor 22 of said submersible pump 2 rises from speed v₁ to speed v₂.

Thereafter, in the solution according to the present embodiment at time t₂, upon detecting 33 a significant increase in the derivate of monitored torque versus pump motor speed, the accelerating ramp 42 is ended and an operational pumping ramp 43 is started 34 by said electric drive apparatus 10. Said operational pumping ramp 43 is a long ramp in which the required speed of the motor 22 of said submersible centrifugal pump 2 is limited and controlled as in normal pumping operation.

In the solution according to the present embodiment said operational pumping ramp 43 is the last step in which the operational pumping condition has been reached and the pumping is proceeded with as in regular pumping. The operational pumping ramp 43 is typically considerably longer in duration than the starting ramp 41 or the accelerating ramp 42. In Figure 5 the time axis is only presented as illustrative and thus out of proportion. When detecting 33 said significant increase in the derivate of monitored torque versus pump motor speed, said significant increase is determined to indicate an operational pumping condition in which the fluid has been pumped above the ground level and there is an increased flow of fluid through said submersible centrifugal pump 2. During said operational pumping ramp 43 the speed of the motor 22 of said submersible centrifugal pump 2 is controlled between speed v₂ and speed v₃ according to process needs, said speed v₃ indicating here the maximum speed for normal pumping operation of said submersible centrifugal pump 2.

Figure 6 illustrates the development of torque and fluid quantity per time versus pump motor speed of embodiment of a solution according to the present invention for starting pumping with a submersible centrifugal pump for pumping fluid. In Figure 6, the development of the monitored torque of the motor 22 of said submersible centrifugal pump 2 versus pump motor speed i.e., versus the speed of the motor 22 of said submersible centrifugal pump 2 is indicated by a graph 52. Respectively in Figure 6, the development of the fluid quantity per time pumped by said submersible centrifugal pump 2 versus pump motor speed i.e., versus the speed of the motor 22 of said submersible centrifugal pump 2 is indicated by a graph 53.

As illustrated in Figure 6, after the starting ramp 41 the monitored torque 52 of the motor 22 of said submersible centrifugal pump 2 has risen to speed v₁. Thereafter, in the solution according to the present embodiment, the torque of the motor 22 of said submersible centrifugal pump 2 versus pump motor speed is monitored 32 in said electric drive apparatus 10. As illustrated in Figure 6, during the accelerating ramp 42 the monitored torque 52 of the motor 22 of said submersible centrifugal pump 2 continues to rise from speed v₁ and at speed v₂ a significant increase in the derivate of monitored torque 52 is seen.

As illustrated in Figure 6, at speed v₂ the fluid starts to flow through said submersible centrifugal pump 2 and the development of the fluid quantity per time 53 pumped by said submersible centrifugal pump 2 starts to rise. Between speed v₂ and speed v₃ the monitored torque 52 of the motor 22 of said submersible centrifugal pump 2 rises significantly and the development of the fluid quantity per time 53 pumped by said submersible centrifugal pump 2 continues to rise.

When the fluid starts to flow, the derivative of torque curve changes. With the help of the solution according to the present invention, the starting moment of fluid flow can be detected by monitoring the torque during the accelerating ramp. This detected point in time is then as the end point for the accelerating ramp and starting point of the operational pumping ramp.

With the help of the method and an arrangement for starting pumping with a submersible centrifugal pump for pumping fluid according to the present invention reduced turbidity and reduced cloudiness in the pumped fluid can be provided. Furthermore, with the help of the solution according to the present invention a fast and secure starting towards operational pumping is provided.

The solution according to the present invention provides an effective and elegant solution for reducing turbidity and cloudiness in the pumped fluid. Furthermore, the method and an arrangement for starting pumping with a submersible centrifugal pump for pumping fluid according to the present invention provides a straightforward and inexpensive solution for a fast and secure starting of a submersible centrifugal pump towards operational pumping.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims and their equivalents.

## Claims

1. A method for starting pumping with a submersible centrifugal pump (2) for pumping fluid, in which method:
- an accelerating ramp (42) for ramping up the speed of the motor (22) of said submersible centrifugal pump (2) is started (31) by an electric drive apparatus (10) controlling said motor (22),
- the torque of the motor (22) of said submersible centrifugal pump (2) versus pump motor speed is monitored (32) in said electric drive apparatus (10), and
- upon detecting (33) a significant increase in the derivate of monitored torque versus pump motor speed, an operational pumping ramp (43) for the motor (22) of said submersible centrifugal pump (2) is started (34) by said electric drive apparatus (10).

2. A method according to claim 1, in which method when detecting (33) said significant increase in the derivate of monitored torque versus pump motor speed, said significant increase is determined to indicate an operational pumping condition.

3. A method according to claim 1 or to claim 2, wherein before said accelerating ramp (42), a starting ramp (41) for starting the motor (22) of said submersible centrifugal pump (2) is carried out.

4. A method according to any of the claims 1-3, in which method said pumped fluid is water.

5. An arrangement for starting pumping with a submersible centrifugal pump (2) for pumping fluid, said arrangement comprising a submersible centrifugal pump (2) and an electric drive apparatus (10) arranged for controlling the motor (22) of said submersible centrifugal pump (2), wherein said electric drive apparatus (10) is arranged:
- for starting (31) an accelerating ramp (42) for ramping up the speed of the motor (22) of said submersible centrifugal pump (2);
- for monitoring the torque of the motor (22) of said submersible centrifugal pump (2) versus pump motor speed; and
- upon detecting (33) a significant increase in the derivate of monitored torque versus pump motor speed, for starting an operational pumping ramp (43) for the motor (22) of said submersible centrifugal pump (2).

6. An arrangement according to claim 5, wherein said electric drive apparatus (10) is arranged to determine when said detected significant increase in the derivate of monitored torque versus pump motor speed indicates the flow of fluid through said submersible centrifugal pump (2).

7. An arrangement according to claim 5 or to claim 6, wherein said electric drive apparatus (10) is arranged to carry out before said accelerating ramp (42) a starting ramp (41) for starting the motor (22) of said submersible centrifugal pump (2).

8. An arrangement according to any of the claims 5-7, wherein said motor providing power to said submersible centrifugal pump is arranged as a separate unit from said submersible centrifugal pump.

9. An arrangement according to any of the claim 8, wherein said motor providing power to the submersible centrifugal pump is arranged above the ground.

10. An arrangement according to any of the claims 5-9, wherein said pumped fluid is water.

11. An arrangement according to any of the claims 5-10, wherein said electric drive apparatus (10) is a frequency converter (10).
